# EUROPEAN PATENT SPECIFICATION

(11) **EP 3 899 375 B1**
(45) Date of publication and mention of the grant of the patent: **22.01.2025**
(21) Application number: 20713840.5
(22) Date of filing: 06.03.2020
(51) Int. Cl.: F24D 19/00, F24H 9/00, F24D 3/10, F24D 19/10, C02F 1/32, C02F 1/50, C02F 1/00, C02F 103/02

(54) **APPARATUS AND METHOD FOR SUPPLYING LIQUID TO A FLUID CIRCUIT OF A HEATING OR A COOLING SYSTEM**
VORRICHTUNG UND VERFAHREN ZUM ZUFÜHREN VON FLÜSSIGKEIT ZU EINEM FLUIDKREISLAUF EINER HEIZUNG ODER EINES KÜHLSYSTEMS
APPAREIL ET PROCÉDÉ DE DISTRIBUTION DE LIQUIDE DANS UN CIRCUIT DE FLUIDE D'UN SYSTÈME DE CHAUFFAGE OU DE REFROIDISSEMENT

(30) Priority: 11.03.2019 GB 201903266
(43) Date of publication of application: 27.10.2021
(73) Proprietor: Vexo International (UK) Ltd, Biggleswade, Bedfordshire SG18 8RH (GB)
(72) Inventor: COWLEY, Richard, 6312 St Francis Bay Eastern Cape (ZA); WILKINSON, Darren, Arlesey SG15 6UR (GB)
(74) Representative: Bryers Intellectual Property Ltd
(86) International application number: PCT/EP2020/056046
(87) International publication number: WO 2020/182668

(56) References cited:
- WO-A1-2015/067917
- WO-A2-2017/129989
- DE-A1- 102015 009 696
- DE-U1- 202016 006 759
- GB-A- 2 115 911
- GB-A- 2 450 086
- GB-A- 2 551 192
- GB-A- 2 566 566

## Description

### Field of the Invention

The present invention relates to fluid circuit filling, in particular to apparatus for and a method of supplying liquid to a fluid circuit of a heating or a cooling system, and also to maintaining a condition of liquid in the fluid circuit of the heating or the cooling system.

### Background of the Invention

Heating systems and cooling systems are known that comprise a fluid circuit through which a fluid circulates under pressure. An example of this type of system is a closed-circuit central heating system, in which system water flows in a loop from a boiler, through a series of hot-water radiators, and then back to the boiler. The system water may comprise a treatment additive, for example to reduce corrosion and/or to inhibit microbiological growths (bacteria or fungi), in addition to water, which may be supplied from a mains water supply.

When a system is connected to a mains water supply, it is desirable to prevent backflow, to avoid treated or contaminated water from entering the mains water supply. A way of achieving this involves utilising a "break" in the fluid flow path between the mains water supply and the fluid circuit. This may be provided by a water tank having an inlet connected to the water supply, an outlet connected to the fluid circuit, and a float-operated valve or other suitably controlled valve for selectively allowing water to flow from the mains into the water tank. An arrangement of this type is utilised in the boiler heated water system of Patent Publication No. GB2115911A, in which a float operated equilibrium valve is used to always maintain a feed tank full of water from a mains water supply.

It is desirable to provide an improved arrangement for creating a "break" in the fluid flow path between the mains water supply and the fluid circuit.

### Summary of the Invention

According to a first aspect there is provided a method of supplying a liquid to a fluid circuit of a heating or a cooling system, the method comprising the steps of: (a) receiving a vessel provided with an inlet port, through which a liquid can enter the vessel in a direction of inflow, and an outlet port, through which a liquid can exit the vessel in a direction of outflow; (b) connecting the inlet port of the vessel to a liquid source via an inlet valve the inlet valve located upstream of the inlet port and operable to prevent or allow a liquid to enter the vessel through the inlet port, and connecting the outlet port of the vessel to the fluid circuit via an outlet valve, the outlet valve located downstream of the outlet port and operable to prevent or allow a liquid to exit the vessel through the outlet port, whereby a flow path between the liquid source and the fluid circuit extends through the vessel; (c) with the inlet valve open and the outlet valve closed, allowing liquid from the liquid source to fill the vessel; (d) with the inlet valve closed and the outlet valve open, allowing liquid within the vessel to drain; (e) with the inlet valve closed and the outlet valve closed, maintaining an air-filled interruption, within the vessel, between the liquid source and the fluid circuit.

A volume of air, contained with the vessel, is therefore usable to provide a "break" in the fluid flow path between the liquid source and the fluid circuit. However, this volume of air is temporarily and selectively replaceable, at least in part, with liquid from the liquid source for supplying to the fluid circuit.

Preferably, at step (c) or step (d) ultraviolet light is emitted to be incident on liquid flowing along said flow path.

In an example, at step (c) or step (d) an additive is supplied to liquid flowing along said flow path.

The liquid source may be a cold mains water supply.

According to a second aspect, there is provided apparatus for supplying a liquid to a fluid circuit of a heating or a cooling system, said apparatus comprising: a vessel provided with an inlet port, through which a liquid can enter the vessel in a direction of inflow, and an outlet port, through which a liquid can exit the vessel in a direction of outflow; an inlet valve located upstream of the inlet port and operable to prevent or allow a liquid to enter the vessel through the inlet port, and an outlet valve located downstream of the outlet port and operable to prevent or allow a liquid to exit the vessel through the outlet port, the inlet port connectable, via the inlet valve, to a liquid source for supplying the vessel with a liquid, and the outlet port connectable, via the outlet valve, to the fluid circuit for supplying the fluid circuit with a liquid, a flow path between a connected liquid source and a connected fluid circuit extending through the vessel; a controller operable to selectively open and close the inlet valve and the outlet valve, a non-transitory computer-readable medium, and program instructions stored on the non-transitory computer-readable medium that are executable by the controller to cause the controller to: (a) during a non-supplying mode of operation, maintain the inlet valve in a closed condition and maintain the outlet valve in a closed condition, for maintaining an air-filled interruption, within the vessel, between the liquid source and the fluid circuit; and (b) during a supplying mode of operation, to successively: (i) cause the inlet valve to be moved from the closed condition into an open condition, (ii) maintain the inlet valve in the open condition and maintain the outlet valve in the closed condition for a first period of time, for allowing the vessel to fill with liquid, (iii) cause the inlet valve to be moved from the open condition into the closed condition, (iv) cause the outlet valve to be moved from the closed condition into an open condition, (v) maintain the inlet valve in the closed condition and maintain the outlet valve in the open condition for a second period of time, for allowing the vessel to drain of liquid, (vi) cause the outlet valve to be moved from the open condition into the closed condition.

Preferably, the apparatus further comprises a light source operable to emit ultraviolet light incident on a liquid flowing along said flow path between a connected liquid source and a connected fluid circuit.

The controller may be operable to selectively turn the light source on and off, and the program instructions stored on the non-transitory computer-readable medium are executable by the controller to cause the controller to: maintain the light source in an off condition during the non-supplying mode of operation, and maintain the light source in an on condition during the supplying mode of operation.

The apparatus may further comprise a dosing valve for connection to an outlet of an additive reservoir, the dosing valve operable to supply an additive from the additive reservoir to a liquid flowing along said flow path between a connected liquid source and a connected fluid circuit.

The apparatus may further comprise a pump operable to move liquid along said flow path between a connected liquid source and a connected fluid circuit.

The controller may be operable to selectively turn the pump on and off, and the program instructions stored on the non-transitory computer-readable medium are executable by the controller to cause the controller to: maintain the pump in an off condition during the non-supplying mode of operation, and maintain the pump in an on condition during a period of the supplying mode of operation.

The apparatus may further comprise a sensing arrangement for providing an indication as to the level of liquid within the vessel.

The controller may comprise a timer.

A determination that the vessel has filled, or emptied, to a sufficient extent may be made based on a reading output to the controller from a sensing arrangement for providing an indication as to the level of liquid within the vessel and/or on a signal generated by a timer comprised by the controller.

The apparatus may further comprise a pressure sensing arrangement for providing an indication as to the pressure of system liquid within a connected fluid circuit.

An initiation of the supplying mode may be made based on a reading output to the controller from a pressure sensing arrangement for providing an indication as to the pressure of system liquid within a connected fluid circuit.

According to a third aspect, there is provided a heating or a cooling system comprising the apparatus of the second aspect. In an example, the liquid source is a cold mains water supply.

Further particular and preferred aspects of the invention are set out in the accompanying dependent claims.

### Brief Description of the Drawings

The present invention will now be more particularly described, with reference to the accompanying drawings, in which:
**Figure 1** shows a schematic of apparatus for supplying a flow of liquid to a fluid circuit of a heating or a cooling system.
**Figure 2** illustrates steps in a mode of operation of the apparatus of **Figure 1****;** and
**Figure 3** shows a schematic of a fluid circuit of a heating system, the heating system comprising the apparatus of **Figure 1****.**

### Description

Illustrative embodiments and examples are described below in sufficient detail to enable those of ordinary skill in the art to embody and implement the apparatus described herein. It is to be understood that embodiments and examples can be provided in many alternate forms and the invention should not be construed as limited to the embodiments and examples set forth herein but by the scope of the appended claims.

Unless otherwise defined, all terms (including technical and scientific terms) used herein are to be interpreted as is customary in the art. In addition, features referred to herein in the singular can number one or more, unless the context clearly indicates otherwise. Similarly, the terms "comprises", "comprising", "includes", "including", "has" and/or "having" when used herein, specify the presence of the stated feature or features and do not preclude the presence or addition of one or more other features, unless the context clearly indicates otherwise.

In the following description, all orientational terms, such as upper, lower, radially and axially, are used in relation to the drawings and should not be interpreted as limiting on the invention, unless the context clearly indicates otherwise.

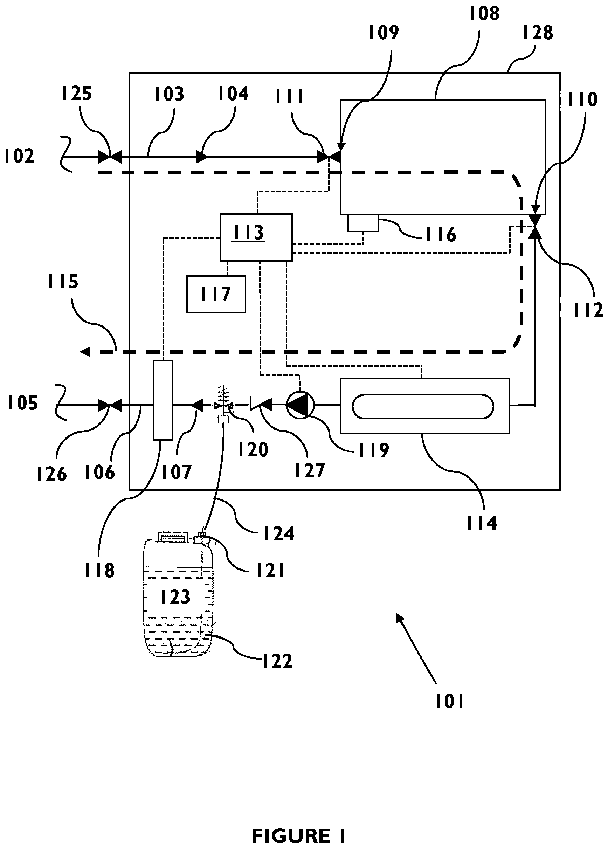

Apparatus for supplying liquid to a fluid circuit of a heating or a cooling system is shown in **Figure 1**. The apparatus is usable to supply a liquid from a liquid source to a fluid circuit of a heating or a cooling system. In an example application, the apparatus 101 is utilised to supply a top-up liquid to the fluid circuit of the heating or the cooling system.

Apparatus 101 is arranged to receive liquid from a liquid source 102, via a fluid conduit 103 connected to the liquid source 102, which may be a mains water supply, in a direction of inflow 104, and to supply liquid to a fluid circuit 105, which may be a fluid circuit of a heating or a cooling system, via a fluid conduit 106 that is connected to the fluid circuit 105, in a direction of outflow 107.

The apparatus 101 comprises a vessel 108 that defines an inlet port 109, through which liquid can enter the vessel 108 in the direction of inflow 104, and an outlet port 110, through which liquid can exit the vessel 108 in the direction of outflow 107. The inlet port 109 is provided with an inlet valve 111, which is located upstream of the inlet port 109 and is operable to prevent or allow a liquid to enter the vessel 108 through the inlet port 109. The outlet port 110 is provided with an outlet valve 112, which is located downstream of the outlet port 110 and is operable to prevent or allow a liquid to exit the vessel 108 through the outlet port 110.

In an example, the vessel 108 is closed with the exception of the inlet port 109 and outlet port 110.

The apparatus 101 further comprises a controller 113. The controller 113 is operable to selectively open and close the inlet valve I I I and the outlet valve 112. The controller 113 is operable to control steps in a method of supplying liquid to a fluid circuit of a heating or a cooling system, for example top-up liquid.

In an example, the liquid source 102 is a cold mains water supply.

According to a method of supplying liquid from the liquid source 102 to the fluid circuit 105: in a first step, with the outlet valve 112 closed and the inlet valve 111 open, liquid enters into the vessel 108 from the liquid source 102; in a second step, the inlet valve 111 is closed; in a third step, the outlet valve 112 is opened and, with the outlet valve 110 open and the inlet valve 111 closed, the liquid that entered the vessel 108 during the first step exits the vessel 108; in a fourth step, the outlet valve 112 is closed, creating a "break" between the inlet valve I I I (on the liquid source 102 side) and the outlet valve 112 (on the fluid circuit 105 side) by means of the vessel 108 being empty of liquid. If further liquid is to be supplied from the liquid source 102 to the fluid circuit 105, in a fifth step the inlet valve 111 is opened and the first step commences again. Thus, the vessel 108 is used to create an air gap to inhibit undesirable backflow of liquid into the liquid source 102, which is especially important when the liquid source 102 is a mains water supply.

Advantageously, apparatus 101 further comprises a light source 114 configured to emit ultraviolet (UV) light incident on liquid flowing from the vessel 108 to the fluid circuit 105. Thus, liquid from the liquid source 102 is treated with UV rays before entering the fluid circuit 105. This UV light functions to destroy bacteria present within liquid flowing from the liquid source 102 before it is introduced into the fluid circuit 105. This ensures that a desired bacteria-free condition of the liquid within the fluid circuit 105 is maintained.

This feature of the apparatus 101 is of significant benefit when the temperature of the liquid flowing in the fluid circuit 105 is not high enough to kill bacteria through heat alone. For example, bacteria in liquid flowing into a fluid circuit of a heating system in which the system fluid is at a temperature of 60 degrees Celsius or higher can be destroyed by the heat of the existing system fluid but bacteria in liquid flowing into a fluid circuit of a cooling system in which the system fluid is at a temperature of below 60 degrees Celsius would not be destroyed in the same way.

According to the shown arrangement, the light source 114 located between the outlet valve 112 and the fluid circuit 105 and, as such, is configured to emit ultraviolet light incident on liquid flowing from the vessel 108 to the fluid circuit 105.

However, it is to be appreciated that the light source 114 may be sited at any suitable location to ensure that liquid from the liquid source 102 is subjected to UV light emitted therefrom before entering the fluid circuit 105. For example, the light source 114 may be located between the liquid source 102 and the inlet valve 111 and, as such, be configured to emit ultraviolet light incident on liquid flowing into the vessel 108 from the liquid source 102. In another example, the light source 114 can be located to emit ultraviolet light incident on liquid within the vessel 108.

The light source 114 may be any suitable light source. The light source 114 may comprise only one or more than one UV light emitting lamps, of any suitable type. The light source 114 may have any suitable shape and dimensions. It is to be appreciated that any physical barrier between a UV light emitting lamp of the light source 114 and liquid to be treated by the UV light will allow an appropriate transmission of the desired light wavelength or wavelengths therethrough. It is hence to be understood that the selection of a material or materials for defining a conduit through which liquid can travel will involve the identification of a material having suitable light transmittance properties.

As also indicated, the controller 113 is also in communication with the light source 114, to selectively power the light source at an appropriate step or steps in a method of supplying liquid from the liquid source 102 to the fluid circuit 105.

The controller 113 may be any suitable device, for example a programmable logic controller (PLC). The controller 113 may comprise, or otherwise have access to, a non-transitory computer-readable medium, with program instructions being stored on the non-transitory computer-readable medium that are executable by the controller to cause the controller to perform each of a plurality of functions.

A heating or a cooling system comprising a fluid circuit may comprise the apparatus 101. The apparatus 101 may be used to provide top-up fluid to the fluid circuit of the heating or the cooling system. The apparatus 101 may be used to provide top-up fluid from a coldwater main supply to a fluid circuit of a heating or a cooling system.

The apparatus 101 may be used to maintain a desired pressurisation of a fluid circuit. It is therefore to be appreciated that other components may be present within a system comprising the apparatus 101.

In an example, a method of supplying a liquid to a heating or a cooling system comprising a fluid circuit comprises the steps of, with reference to **Figure 1****:**
(a) receiving a vessel 108 provided with an inlet port 109, through which a liquid can enter the vessel 108 in a direction of inflow 104, and an outlet port 110, through which a liquid can exit the vessel 108 in a direction of outflow 107;
(b) connecting the inlet port 109 of the vessel 108 to a liquid source 102 via an inlet valve 111 and connecting the outlet port 112 of the vessel 108 to the fluid circuit 105 via an outlet valve 112, whereby a flow path 115 between the liquid source 102 and the fluid circuit 105 extends through the vessel 108;
(c) with the inlet valve 111 open and the outlet valve 112 closed, allowing liquid from the liquid source 102 to fill the vessel 108;
(d) with the inlet valve 111 closed and the outlet valve 112 open, allowing liquid within the vessel 108 to drain;
(e) with the inlet valve 111 closed and the outlet valve 112 closed, maintaining an air-filled interruption between the liquid source 102 and the fluid circuit 105.

It is to be understood that at any point in time, the apparatus 101 may be in a non-supplying mode of operation ("air-break" mode) or in a supplying mode of operation ("filling" mode).

In an example, the mode of operation of the apparatus 101 is the non-supplying mode of operation ("air-break" mode) unless the supplying mode of operation ("filling" mode) is initiated.

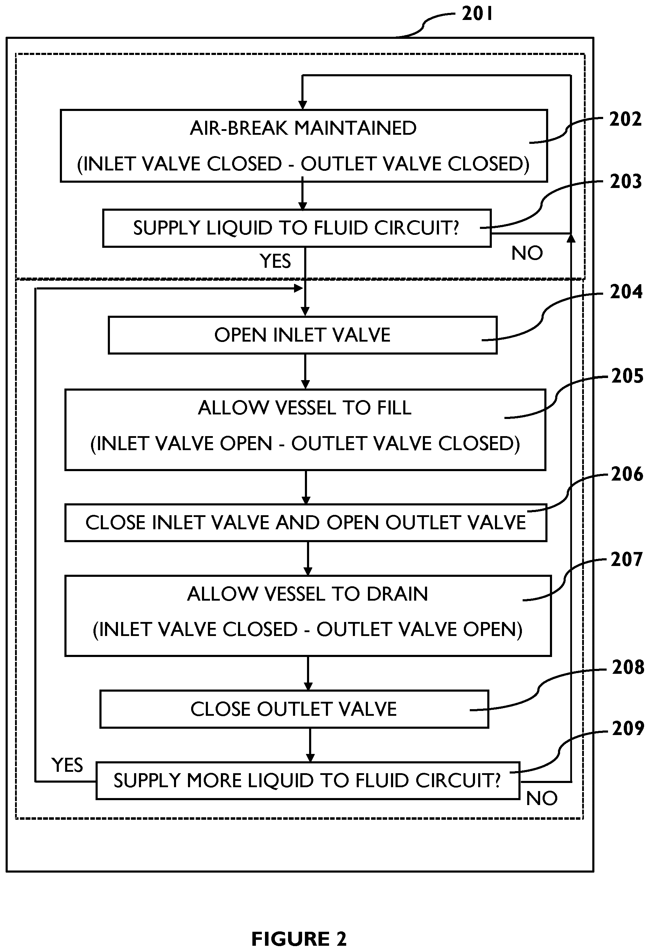

Operations performable by the apparatus 101 of **Figure 1** will now be illustrated with reference to the method 201 shown in **Figure 2****.**

During step 202, an air-filled interruption ("air-break") between the liquid source 102 and the fluid circuit 105 is maintained. Both the inlet valve 111 and the outlet valve 112 are closed, and the vessel 108 is empty of liquid. Thus, the air in the vessel 108 provides a "break" in the flow path 115 between the liquid source 102 and the fluid circuit 105.

At step 203, a question is asked as to whether liquid is to be supplied to the fluid circuit 105. If the question asked at step 203 is answered in the negative, step 202 is again entered.

However, if the question asked at step 203 is answered in the affirmative, step 204 is entered.

The entry into step 204 from step 203 represents the apparatus 101 switching from a non-supplying mode of operation ("air-break" mode) into a supplying mode of operation ("filling" mode).

At step 204, the inlet valve 111 is opened. This allows liquid to flow from the liquid source 102 into the vessel 108, which fills, during step 205, because the outlet valve 112 is still closed. When the vessel 108 has filled sufficiently, step 206 is entered. At step 206, the inlet valve 111 is closed and the outlet valve 112 is opened. This allows liquid to flow from the vessel 108, which empties, during step 207, because the inlet valve 111 is now closed. When the vessel 108 has drained sufficiently, step 208 is entered. At step 208, the outlet valve 112 is closed. Both the inlet valve 111 and the outlet valve 112 are now closed.

At step 209 a question is asked as to whether more liquid is to be supplied to the fluid circuit 105. If the question asked at step 203 is answered in the affirmative, step 204 is again entered.

However, if the question asked at step 209 is answered in the negative, step 202 is entered.

The entry into step 202 from step 209 represents the apparatus 101 switching from the supplying mode of operation ("filling" mode) back into the non-supplying mode of operation ("air-break" mode).

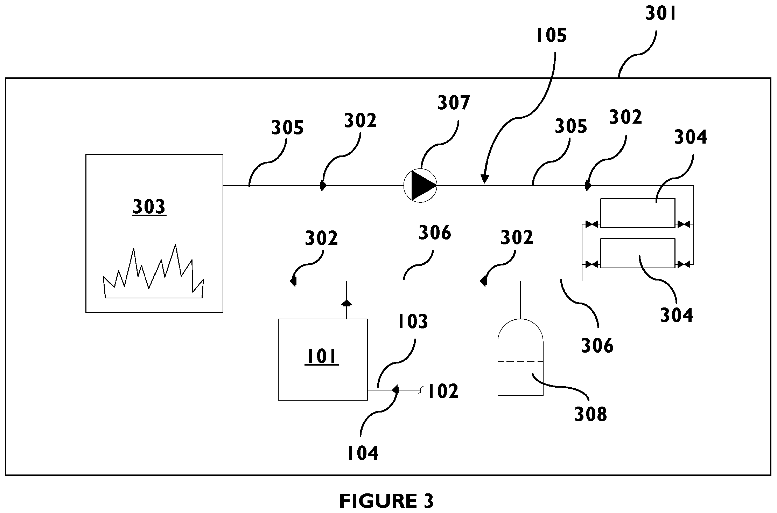

**Figure 3** shows apparatus 101 for supplying a liquid from a liquid source to a fluid circuit within a heating system 301 comprising fluid circuit 105.

The direction of circulating flow of system liquid around the fluid circuit 105 is indicated by arrows 302. Heating system 301 comprises a heat source 303, such as a boiler, and at least one heat emitter 304, such as a radiator. A main system flow pipe 305 extends from the heat source 303 to the at least one heat emitter 305, and a main system return pipe 306 extends from the at least one heat emitter 304 to the heat source 303.

Heating system 301 comprises a system pump 307, which is disposed along main system flow pipe 305 between the heat source 303 and the at least one heat emitter 304, and which is operable to circulate system liquid around the fluid circuit 105 in the direction of circulating flow 302. In this illustrated example, heating system 301 further comprises an expansion vessel 308, which is disposed along main system return pipe 306 between at least one heat emitter 304 and the heat source 303.

Apparatus 101 is arranged to receive liquid via the fluid conduit 103 connected to liquid source 102, in the direction of inflow 104, and to supply liquid to the fluid circuit 105 via the fluid conduit 106 that is connected to the main system return pipe 306, in a direction of outflow 107.

The liquid supplied to the fluid circuit 105 of the heating system 301 by the apparatus 101 may be a flow of top-up liquid to the fluid circuit 301.

It is to be appreciated that the apparatus 101 for supplying a liquid from a liquid source to a fluid circuit may be used within a cooling system comprising fluid circuit 105.

In a specific example, apparatus for supplying a liquid to a heating or a cooling system comprising a fluid circuit comprises, with reference to **Figure 1****:**
a vessel 108 provided with an inlet port 109, through which a liquid can enter the vessel 108 in a direction of inflow 104, and an outlet port 110, through which a liquid can exit the vessel 108 in a direction of outflow 107;
an inlet valve 111 located upstream of the inlet port 109 and operable to prevent or allow a liquid to enter the vessel 108 through the inlet port 109, and
an outlet valve 112 located downstream of the outlet port 110 and operable to prevent or allow a liquid to exit the vessel 108 through the outlet port 110,
the inlet port 109 connectable, via the inlet valve 111, to a liquid source 102 for supplying the vessel 108 with a liquid, and the outlet port 110 connectable, via the outlet valve 112, to the fluid circuit 105 for supplying the fluid circuit 105 with a liquid, a flow path 115 between a connected liquid source 102 and a connected fluid circuit 105 extending through the vessel 108;
a controller 113 operable to selectively open and close the inlet valve 111 and the outlet valve 112,
a non-transitory computer-readable medium, and
program instructions stored on the non-transitory computer-readable medium that are executable by the controller 113 to cause the controller 113 to:
   (a) during a non-supplying mode of operation, maintain the inlet valve 111 in a closed condition and maintain the outlet valve 112 in a closed condition, for maintaining an air-filled interruption between the liquid source 102 and the fluid circuit 105; and
   (b) during a supplying mode of operation, to successively:
      (i) cause the inlet valve 111 to be moved from the closed condition into an open condition,
      (ii) maintain the inlet valve 111 in the open condition and maintain the outlet valve in the closed condition 112 for a first period of time, for allowing the vessel 108 to fill with liquid,
      (iii) cause the inlet valve 111 to be moved from the open condition into the closed condition,
      (iv) cause the outlet valve 112 to be moved from the closed condition into an open condition,
      (v) maintain the inlet valve 111 in the closed condition and maintain the outlet valve in the open condition 112 for a second period of time, for allowing the vessel 108 to drain of liquid,
      (vi) cause the outlet valve 112 to be moved from the open condition into the closed condition.

In a preferred specific example, the apparatus 101 further comprises a light source 114 operable to emit ultraviolet light incident on a liquid flowing along a flow path 115 between the liquid source 102 and the fluid circuit 105, the flow path 115 extending through the vessel 108. Preferably, the light source 114 is operable to emit ultraviolet light incident on a liquid flowing along the flow path 115 at a position that is downstream of the outlet port 110 of the vessel 108. Preferably also, the controller 113 is operable to selectively turn the light source 114 on and off, and the program instructions stored on the non-transitory computer-readable medium are executable by the controller 113 to cause the controller 113 to: maintain the light source 114 in an off condition during the non-supplying mode of operation, and maintain the light source 114 in an on condition during the supplying mode of operation.

In an example, the controller 113 is configured to receive an input from a sensing apparatus 116 for providing an indication as to the level of liquid within the vessel 108 and/or a timer 117, which may be comprised by the controller 113.

During the supplying mode, a determination that vessel 108 has filled to a sufficient extent may be made based on a reading output to the controller 113 from a sensing arrangement 116 for providing an indication as to the level of liquid within the vessel 108 and/or on a signal generated by a timer (not shown) comprised by the controller 113. Similarly, a determination that vessel 108 has emptied to a sufficient extent may be made based on a reading output to the controller 113 from a sensing arrangement 116 for providing an indication as to the level of liquid within the vessel 108 and/or on a signal generated by a timer (not shown) comprised by the controller 113.

Thus, in the specific example outlined above, the duration of the first period of time may be the length of time taken before a sensing arrangement 116 indicates that the vessel 108 has filled up to a predetermined extent of filling or may be a predetermined duration monitored by a timer 117, this duration having previously been calculated to be adequate to allow the vessel 108 to fill to a suitable extent, and, likewise, the second period of time may be the length of time taken before a sensing arrangement 116 indicates that the vessel 108 has drained down to a predetermined extent of draining or may be a predetermined duration monitored by a timer 117, this duration having previously been calculated to be adequate to allow the vessel 108 to empty to a suitable extent.

The sensing arrangement 116 may comprise any suitable number of sensors, the or each being of any suitable type and the or each being sited at any suitable position.

An extent of filling may be determined from a reading of the height of liquid contained within the vessel. Similarly, an extent of draining may be determined from a reading of the height of liquid contained within the vessel. Hence, in an example, the sensing arrangement 116 comprises a first sensor at a first position for detecting that the vessel 108 has filled completely or otherwise to a maximum extent, and a second sensor at a second, different position for detecting that the vessel 108 has emptied completely or otherwise to a minimum extent.

An extent of filling may be determined from a reading of the volume of liquid that has flowed into the vessel. Similarly, an extent of draining may be determined from a reading of the volume of liquid that has flowed out of the vessel. Hence, in an example, the sensing arrangement 116 comprises a first flow meter at a first position for measuring the volume of liquid flowing into the vessel 108 through the inlet port 109 and a second flow meter at a second, different position for measuring the volume of liquid flowing from the vessel 108 through the outlet port 110.

An extent of filling may be determined from a reading of the pressure of liquid that has flowed out of the vessel. Similarly, an extent of draining may be determined from a reading of the pressure of liquid that has flowed out of the vessel. Hence, in an example, the sensing arrangement 116 comprises a pressure sensor at a suitable position.

In an example, the controller 113 is configured to receive an input from a pressure sensing arrangement 118 for providing an indication as to the pressure of system liquid within the fluid circuit 105. The pressure sensing arrangement 118 may comprise any suitable number of sensors, the or each being of any suitable type and the or each being sited at any suitable position. A pressure sensor of the pressure sensing arrangement 118 may be located within the flow path 115 (as shown in **Figure 1**) or alternatively the fluid circuit 105.

In the example of **Figure 1****,** the apparatus 101 comprises the pressure sensing arrangement 118. In the specific illustrated arrangement of **Figure 1****,** the pressure sensing arrangement 118 is within the flow path 115 and, in this example, is positioned downstream of the light source 114.

Initiation of the supplying mode may be made based on a reading output to the controller from a pressure sensing arrangement for providing an indication as to the pressure of system liquid within a connected fluid circuit.

Apparatus 101 functions to assist system liquid of a fluid circuit of a heating or a cooling system to be maintained at a desired pressure.

Steps in a method of supplying a liquid to a fluid circuit of a heating or a cooling system will now be described.

A pressure level of system liquid in the fluid circuit is measured to obtain a pressure level indication. This pressure level indication is then compared with a pressure level threshold, which is associated with a desired pressure of system liquid, to determine whether the pressure level indication is below the pressure level threshold.

In response to determining, from the comparison, that the pressure level indication is not below the pressure level threshold, the previous steps of measuring a pressure level of system liquid in the fluid circuit to obtain a pressure level indication and then comparing this pressure level indication with the pressure level threshold to determine whether the pressure level indication exceeds the pressure level threshold are repeated.

However, in response to determining, from a comparison of a pressure level indication with the pressure level threshold, that the pressure level indication is below the pressure level threshold, an activation signal is generated to initiate a supplying mode to supply liquid from the liquid source to the connected fluid circuit.

Thus, the pressure level of system liquid in the fluid circuit is measured and when a drop in the system liquid pressure is detected, the supplying mode is initiated to restore the system liquid pressure to a desired operating pressure level.

The supplying mode may be initiated if any pressure drop is detected or only if a pressure drop of a predetermined extent has been detected.

Referring to the method 201 of **Figure 2****,** these pressure level measuring and comparison steps are associated with step 203, at which a question is asked as to whether or not liquid is to be supplied to the fluid circuit (with step 202 being re-entered if the question is answered in the negative, if a pressure drop has not been detected or a predetermined extent of a pressure drop has not been detected, and with step 204 being entered if the question is answered in the affirmative, if a pressure drop has been detected or a predetermined extent of a pressure drop has been detected).

Further steps in the method of supplying a liquid to a fluid circuit of a heating or a cooling system will now be described.

A pressure level of system liquid is then measured to obtain a subsequent pressure level indication. This subsequent pressure level of system liquid is then compared with the pressure level threshold to determine whether the subsequent pressure level indication is below the pressure level threshold.

In response to determining, from the comparison, that the subsequent pressure level indication is not below the pressure level threshold, the previous steps of measuring a pressure level of system liquid in the fluid circuit and then comparing this pressure level indication with the pressure level threshold to determine whether the pressure level indication is below the pressure level threshold are repeated.

However, in response to determining, from a comparison of a subsequent pressure level indication with the pressure level threshold, that the subsequent pressure level indication is below the pressure level threshold, the supplying mode is again initiated.

Thus, at the end of the supplying mode, the pressure level of system liquid in the fluid circuit is measured and when the desired operating pressure level has been reached, with the system liquid topped-up properly, the non-supplying mode is entered and the pressure level of system liquid in the fluid circuit is monitored to detect a drop in the system liquid pressure; however, if the desired operating pressure level has not been reached, with further topping-up of the system liquid required, the supplying mode is again entered.

Referring to the method 201 of **Figure 2****,** these further pressure level measuring and comparison steps are associated with step 209, at which a question is asked as to whether or not more liquid is to be supplied to the fluid circuit (with step 202 being re-entered if the question is answered in the negative, if restoration to the desired operating pressure has been detected, and with step 204 being entered if the question is answered in the affirmative, if restoration to the desired operating pressure has not been detected).

In an example, the step of entering the supplying mode from the non-supplying mode involves the controller 113 switching on the light source 114 to begin emitting UV light and the step of entering the non-supplying mode from the supplying mode involves the controller 113 switching off the light source 114 to stop emitting UV light.

In an example, the apparatus 101 further comprises a pump 119, which is operable to move liquid from the vessel 108 along the flow path 115 towards the fluid circuit 105. The pump 119 may be any suitable type and sited at any suitable location.

In an example, with reference to the method 201 of **Figure 2****,** the step 207 of allowing the vessel 108 to drain involves the controller 113 switching on the pump 119 to start moving liquid along the flow path 115 and then switching off the pump 119 to stop moving liquid along the flow path 115 at an appropriate point thereafter. Thus, the pump 119 is on during a period of the supplying mode and is off during the non-supplying mode.

As previously stated, according to the illustrated example, liquid flowing along the flow path 115 may originate from a cold mains water supply, and the UV beam incident thereon from the light source 114 functions to kill bacteria within this fresh water. In this way, bacteria are prevented from entering the fluid circuit 105 when it is being topped up.

In the specific illustrated arrangement of **Figure 1****,** the light source 114 is configured to emit ultraviolet light incident on liquid flowing from the vessel 108 to the fluid circuit 105 at a position along the flow path 115 that is upstream of the pump 119. This particular siting of the light source 114 serves to inhibit the flow of live bacteria into the pump 119, which hinders bacterial growth on internal surfaces of the pump 119. However, it is to be appreciated that the light source 114 may be sited at any suitable location to ensure that liquid from the vessel 108 is subjected to UV light emitted therefrom before entering the fluid circuit 105. Thus, the light source 114 may be located downstream of the pump 119.

Thus, in a method of supplying a liquid to a fluid circuit of a heating or a cooling system, during the supplying mode, the liquid from the liquid source is treated with UV light before entering the fluid circuit.

Optionally, and in the specific illustrated example of **Figure 1****,** the apparatus 101 further comprises a dosing valve 120 for connection to an outlet 121 of an additive reservoir 122 such that the dosing valve 120 is operable to supply a flow of an additive 123 from the additive reservoir 122 to liquid flowing along the flow path 115. Thus, liquid from the vessel 108 is dosed with an additive before entering the fluid circuit 105. This ensures that a desired additive-concentration condition of the system water is maintained.

As previously stated, according to this illustrated embodiment, the liquid flowing along the flow path 115 may originate from a cold mains water supply, and the dosing valve 120 functions to dose this fresh water with the additive 123. In this way, the additive 123 is introduced into the liquid prior to entering the system fluid when the fluid circuit 105 is being topped-up.

This feature of the apparatus 101 is of significant benefit when system fluid may be lost through leakage or maintenance draining. For example, introducing an amount of additive 123 as liquid enters the fluid circuit 105 serves to ensure that protection is provided at the earliest stage and also enables an amount of additive 123 to be introduced into the existing system fluid to supplement an existing concentration of the additive 123 therein.

The dosing valve 120 may be any suitable type. In an embodiment, the dosing valve 120 is a proportional dosage valve. The additive 123 may be any suitable type. In an embodiment, the additive 123 is a corrosion inhibitor. According to the shown arrangement, a fluid conduit 124, which in this example is a flexible fluid conduit, extends from the dosing valve 120 into the additive 123. The additive reservoir 122 may be any suitable type, for example a chemical container.

In the shown arrangement, the dosing valve 120 is located downstream of the outlet port 110 of the vessel 108, and in this example, is downstream of the pump 119. It is to be appreciated however that the dosing valve 120 may be sited at any suitable position for introducing the additive 123 to liquid flowing to the fluid circuit 105.

Thus, in a method of supplying a liquid to a fluid circuit of a heating or a cooling system, during the supplying mode, an additive may be supplied to the liquid from the liquid source before entering the fluid circuit.

In an example, liquid flowing from the vessel 108 is treated with UV light before entering the pump 119 and is dosed with an additive 123 after exiting the pump 119.

It is to be appreciated that in an embodiment in which the apparatus 101 comprises both the light source 114 and the dosing valve 120 that only one or the other of these features may be deployed and therefore liquid flowing from the vessel 108 during the supplying mode may be treated with UV light via the light source 114 or dosed with an additive via the dosing valve 120.

Further it is to be appreciated that in an embodiment, the apparatus 101 comprises only one of the light source 114 and the dosing valve 120.

Therefore, in a method of supplying a liquid to a fluid circuit of a heating or a cooling system using apparatus as described, liquid supplied to the fluid circuit may be one or both of: treated with UV light, dosed with an additive.

Further features of the specific illustrated example will now be mentioned. An isolation valve 125 is disposed between the liquid source 102 and the inlet valve 111, and a pressurised isolation valve 126 is disposed between the outlet valve 112 and the fluid circuit 105. A non-return valve 127 is disposed between the pump 119 and the dosing valve 120, to prevent the flow of liquid back towards the pump 119. In an example, air is allowed to vent from one or more positions along the fluid flow path 115 between the liquid source 102 and the fluid circuit 105.

A cabinet 128 for housing some or all of the various components of the apparatus 101 is also shown. According to the illustrated embodiment, connections to componentry within the cabinet 128 are made via fluid conduit 103 (connection between liquid source 102 and inlet port 109), fluid conduit 106 (connection between fluid circuit outlet port 110 and fluid circuit 105) and fluid conduit 124 (connection between flow path 115 and additive reservoir 122). The use of a cabinet 128 provides for convenient introduction of the apparatus 101 to a heating or a cooling system. The cabinet 128 may be any suitable shape and have any suitable dimensions, and may be fabricated from any suitable material or combination of materials.

The present invention provides apparatus for, and a method of, supplying a liquid to a fluid circuit of a heating or a cooling system. A supplying mode is initiated in response to detection of a drop in a pressure level of system liquid in the fluid circuit. A light source may be provided that is operable to treat the top-up liquid with ultraviolet light prior to entering the fluid circuit. A dosing valve may be provided that is operable to dose the top-up liquid with an additive prior to entering the fluid circuit.

Although illustrative embodiments and examples of the invention have been disclosed in detail herein, with reference to the accompanying drawings, it is to be understood that the invention is not limited to the precise embodiment and examples shown and/or described and that various changes and modifications can be effected therein by one skilled in the art without departing from the scope of the invention as defined by the appended claims.

## Claims

1. A method of supplying a liquid to a fluid circuit (105) of a heating or a cooling system (301), the method comprising the steps of:
(a) receiving a vessel (108) provided with an inlet port (109), through which a liquid can enter the vessel (108) in a direction of inflow (104), and an outlet port (110), through which a liquid can exit the vessel (108) in a direction of outflow (107);
(b) connecting the inlet port (109) of the vessel (108) to a liquid source (102) via an inlet valve (111), the inlet valve (111) located upstream of the inlet port (109) and operable to prevent or allow a liquid to enter the vessel (108) through the inlet port (109), and connecting the outlet port (110) of the vessel (108) to the fluid circuit (105) via an outlet valve (112), the outlet valve (112) located downstream of the outlet port (110) and operable to prevent or allow a liquid to exit the vessel (108) through the outlet port (I 10), whereby a flow path (115) between the liquid source (102) and the fluid circuit (105) extends through the vessel (108);
(c) with the inlet valve (111) open and the outlet valve (112) closed, allowing liquid from the liquid source (102) to fill the vessel (108);
(d) with the inlet valve (111) closed and the outlet valve (112) open, allowing liquid within the vessel (108) to drain;
(e) with the inlet valve (111) closed and the outlet valve (112) closed, maintaining an air-filled interruption, within the vessel (108), between the liquid source (102) and the fluid circuit (105).

2. A method as claimed in claim **1,** wherein at step (c) or step (d) ultraviolet light is emitted to be incident on liquid flowing along said flow path (115).

3. A method as claimed in claim 1 or claim 2, wherein at step (c) or step (d) an additive (123) is supplied to liquid flowing along said flow path (115).

4. A method as claimed in any of claim 1 to 3, wherein the liquid source (102) is a cold mains water supply.

5. Apparatus (101) for supplying a liquid to a fluid circuit (105) of a heating or a cooling system (301), said apparatus comprising:
a vessel (108) provided with an inlet port (109), through which a liquid can enter the vessel (108) in a direction of inflow (104), and an outlet port (110), through which a liquid can exit the vessel (108) in a direction of outflow (107);
an inlet valve (111) located upstream of the inlet port (109) and operable to prevent or allow a liquid to enter the vessel (108) through the inlet port (109), and
an outlet valve (112) located downstream of the outlet port (110) and operable to prevent or allow a liquid to exit the vessel (108) through the outlet port (110),
the inlet port (109) connectable, via the inlet valve (111), to a liquid source (102) for supplying the vessel (108) with a liquid, and the outlet port (110) connectable, via the outlet valve (112), to the fluid circuit (105) for supplying the fluid circuit (105) with a liquid, a flow path (115) between a connected liquid source (102) and a connected fluid circuit (1050 extending through the vessel (108);
a controller (113) operable to selectively open and close the inlet valve (111) and the outlet valve (112),
a non-transitory computer-readable medium, and
program instructions stored on the non-transitory computer-readable medium that are executable by the controller (113) to cause the controller (113)to:
(a) during a non-supplying mode of operation, maintain the inlet valve (109) in a closed condition and maintain the outlet valve (110) in a closed condition, for maintaining an air-filled interruption, within the vessel (108), between the liquid source (102) and the fluid circuit (105); and
(b) during a supplying mode of operation, to successively:
(i) cause the inlet valve (109) to be moved from the closed condition into an open condition,
(ii) maintain the inlet valve (111) in the open condition and maintain the outlet valve (1102) in the closed condition for a first period of time, for allowing the vessel (108) to fill with liquid,
(iii) cause the inlet valve (111) to be moved from the open condition into the closed condition,
(iv) cause the outlet valve (112) to be moved from the closed condition into an open condition,
(v) maintain the inlet valve (111) in the closed condition and maintain the outlet valve (112) in the open condition for a second period of time, for allowing the vessel (108) to drain of liquid,
(vi) cause the outlet valve (112) to be moved from the open condition into the closed condition.

6. Apparatus (101) as claimed in claim 5, further comprising a light source (114) operable to emit ultraviolet light incident on a liquid flowing along said flow path (115) between a connected liquid source (102) and a connected fluid circuit (105).

7. Apparatus (101) as claimed in claim 6, wherein the controller (113) is operable to selectively turn the light source (114) on and off, and the program instructions stored on the non-transitory computer-readable medium are executable by the controller (113) to cause the controller (113) to:
maintain the light source (114) in an off condition during the non-supplying mode of operation, and
maintain the light source (114) in an on condition during the supplying mode of operation.

8. Apparatus (101) as claimed in any of claims 4 to 7, further comprising a dosing valve (120) for connection to an outlet (121) of an additive reservoir (122), wherein the dosing valve (120) is operable to supply an additive (123) from the additive reservoir (122) to a liquid flowing along said flow path (115) between a connected liquid source (102) and a connected fluid circuit (105).

9. Apparatus (101) as claimed in any of claims 4 to 8, further comprising a pump (119) operable to move liquid along said flow path (115) between a connected liquid source (102) and a connected fluid circuit (105).

10. Apparatus (101) as claimed in claim 9, wherein the controller (113) is operable to selectively turn the pump (119) on and off, and the program instructions stored on the non-transitory computer-readable medium are executable by the controller (113) to cause the controller (113) to:
maintain the pump (119( in an off condition during the non-supplying mode of operation, and
maintain the pump (119) in an on condition during a period of the supplying mode of operation.

11. Apparatus (101) as claimed in any of claims 4 to 10, further comprising a sensing arrangement (116) for providing an indication as to the level of liquid within the vessel (108).

12. Apparatus (101) as claimed in any of claims 4 to 11, wherein the controller (113) comprises a timer.

13. Apparatus (101) as claimed in any of claims 4 to 12, further comprising a pressure sensing arrangement (118) for providing an indication as to the pressure of system liquid within a connected fluid circuit (115).

14. A heating or a cooling system (301) comprising the apparatus (101) of any of claims 4 to 13.

15. A heating or a cooling system (301) as claimed in claim 14, wherein the liquid source (102) is a cold mains water supply.

## Patentansprüche

1. Verfahren zum Zuführen einer Flüssigkeit zu einem Fluidkreislauf (105) eines Heiz- oder Kühlsystems (301), wobei das Verfahren die folgenden Schritte umfasst:
(a) Aufnehmen eines Gefäßes (108), das mit einem Einlassanschluss (109), durch den eine Flüssigkeit in einer Einströmrichtung (104) in das Gefäß (108) eintreten kann, und einem Auslassanschluss (110) versehen ist, durch den eine Flüssigkeit in einer Ausströmrichtung (107) aus dem Gefäß (108) austreten kann;
(b) Verbinden des Einlassanschlusses (109) des Gefäßes (108) mit einer Flüssigkeitsquelle (102) über ein Einlassventil (111), wobei das Einlassventil (111) stromaufwärts des Einlassanschlusses (109) angeordnet und betriebsfähig ist, zu verhindern oder zu ermöglichen, dass eine Flüssigkeit durch den Einlassanschluss (109) in das Gefäß (108) eintritt, und Verbinden des Auslassanschlusses (110) des Gefäßes (108) mit dem Fluidkreislauf (105) über ein Auslassventil (112), wobei das Auslassventil (112) stromabwärts des Auslassanschlusses (110) angeordnet und betriebsfähig ist, zu verhindern oder zu ermöglichen, dass eine Flüssigkeit durch den Auslassanschluss (110) aus dem Gefäß (108) austritt, wodurch sich ein Strömungsweg (115) zwischen der Flüssigkeitsquelle (102) und dem Fluidkreislauf (105) durch das Gefäß (108) erstreckt;
(c) bei geöffnetem Einlassventil (111) und geschlossenem Auslassventil (112) Ermöglichen, dass Flüssigkeit aus der Flüssigkeitsquelle (102) das Gefäß (108) füllt;
(d) bei geschlossenem Einlassventil (111) und geöffnetem Auslassventil (112) Ermöglichen, dass Flüssigkeit innerhalb des Gefäßes (108) abfließt;
(e) bei geschlossenem Einlassventil (111) und geschlossenem Auslassventil (112) Aufrechterhalten einer luftgefüllten Unterbrechung innerhalb des Gefäßes (108) zwischen der Flüssigkeitsquelle (102) und dem Fluidkreislauf (105).

2. Verfahren nach Anspruch 1, wobei in Schritt (c) oder Schritt (d) Ultraviolettlicht emittiert wird, um auf die entlang des Strömungswegs (115) fließende Flüssigkeit einzufallen.

3. Verfahren nach Anspruch 1 oder 2, wobei in Schritt (c) oder Schritt (d) ein Additiv (123) der entlang des Strömungswegs (115) fließenden Flüssigkeit zugeführt wird.

4. Verfahren nach einem der Ansprüche 1 bis 3, wobei die Flüssigkeitsquelle (102) eine Leitungskaltwasserversorgung ist.

5. Vorrichtung (101) zum Zuführen einer Flüssigkeit zu einem Fluidkreislauf (105) eines Heiz- oder Kühlsystems (301), wobei die Vorrichtung Folgendes umfasst:
ein Gefäß (108), das mit einem Einlassanschluss (109), durch den eine Flüssigkeit in einer Einströmrichtung (104) in das Gefäß (108) eintreten kann, und einem Auslassanschluss (110) versehen ist, durch den eine Flüssigkeit in einer Ausströmrichtung (107) aus dem Gefäß (108) austreten kann;
ein Einlassventil (111), das stromaufwärts des Einlassanschlusses (109) angeordnet und betriebsfähig ist, zu verhindern oder zu ermöglichen, dass eine Flüssigkeit durch den Einlassanschluss (109) in das Gefäß (108) eintritt, und
ein Auslassventil (112), das stromabwärts des Auslassanschlusses (110) angeordnet und betriebsfähig ist, zu verhindern oder zu ermöglichen, dass eine Flüssigkeit durch den Auslassanschluss (110) aus dem Gefäß (108) austritt,
wobei der Einlassanschluss (109) über das Einlassventil (111) mit einer Flüssigkeitsquelle (102) zum Versorgen des Gefäßes (108) mit einer Flüssigkeit verbindbar ist und der Auslassanschluss (110) über das Auslassventil (112) mit dem Fluidkreislauf (105) zum Versorgen des Fluidkreislaufs (105) mit einer Flüssigkeit verbindbar ist, wobei sich ein Strömungsweg (115) zwischen einer angeschlossenen Flüssigkeitsquelle (102) und einem angeschlossenen Fluidkreislauf (105) durch das Gefäß (108) erstreckt;
eine Steuervorrichtung (113), die betriebsfähig ist, das Einlassventil (111) und das Auslassventil (112) selektiv zu öffnen und zu schließen,
ein nichtflüchtiges computerlesbares Medium und
auf dem nichtflüchtigen computerlesbaren Medium gespeicherte Programmanweisungen, die durch die Steuervorrichtung (113) ausführbar sind, um die Steuervorrichtung (113) zu veranlassen:
(a) während eines Nicht-Zuführbetriebsmodus das Einlassventil (109) in einem geschlossenen Zustand zu halten und das Auslassventil (110) in einem geschlossenen Zustand zu halten, um eine luftgefüllte Unterbrechung innerhalb des Gefäßes (108) zwischen der Flüssigkeitsquelle (102) und dem Fluidkreislauf (105) aufrechtzuerhalten; und
(b) während eines Zuführbetriebsmodus nacheinander:
(i) zu veranlassen, dass das Einlassventil (109) aus dem geschlossenen Zustand in einen geöffneten Zustand bewegt wird,
(ii) das Einlassventil (111) im geöffneten Zustand zu halten und das Auslassventil (1102) im geschlossenen Zustand für eine erste Zeitdauer zu halten, um zu ermöglichen, dass sich das Gefäß (108) mit Flüssigkeit füllt,
(iii) zu veranlassen, dass das Einlassventil (111) aus dem geöffneten Zustand in den geschlossenen Zustand bewegt wird,
(iv) zu veranlassen, dass das Auslassventil (112) aus dem geschlossenen Zustand in einen geöffneten Zustand bewegt wird,
(v) das Einlassventil (111) im geschlossenen Zustand zu halten und das Auslassventil (112) im geöffneten Zustand für eine zweite Zeitdauer zu halten, um zu ermöglichen, dass das Gefäß (108) von Flüssigkeit entleert wird,
(vi) zu veranlassen, dass das Auslassventil (112) aus dem geöffneten Zustand in den geschlossenen Zustand bewegt wird.

6. Vorrichtung (101) nach Anspruch 5, ferner umfassend eine Lichtquelle (114), die betriebsfähig ist, Ultraviolettlicht zu emittieren, das auf eine entlang des Strömungswegs (115) zwischen einer angeschlossenen Flüssigkeitsquelle (102) und einem angeschlossenen Fluidkreislauf (105) fließende Flüssigkeit einfällt.

7. Vorrichtung (101) nach Anspruch 6, wobei die Steuervorrichtung (113) betriebsfähig ist, die Lichtquelle (114) selektiv ein- und auszuschalten, und die auf dem nichtflüchtigen computerlesbaren Medium gespeicherten Programmanweisungen durch die Steuervorrichtung (113) ausführbar sind, um die Steuervorrichtung (113) zu veranlassen:
die Lichtquelle (114) während des Nicht-Zuführbetriebsmodus in einem ausgeschalteten Zustand zu halten, und
die Lichtquelle (114) während des Zuführbetriebsmodus in einem eingeschalteten Zustand zu halten.

8. Vorrichtung (101) nach einem der Ansprüche 4 bis 7, ferner umfassend ein Dosierventil (120) zum Anschluss an einen Auslass (121) eines Additivbehälters (122), wobei das Dosierventil (120) betriebsfähig ist, ein Additiv (123) aus dem Additivbehälter (122) einer entlang des Strömungswegs (115) zwischen einer angeschlossenen Flüssigkeitsquelle (102) und einem angeschlossenen Fluidkreislauf (105) fließenden Flüssigkeit zuzuführen.

9. Vorrichtung (101) nach einem der Ansprüche 4 bis 8, ferner umfassend eine Pumpe (119), die betriebsfähig ist, Flüssigkeit entlang des Strömungswegs (115) zwischen einer angeschlossenen Flüssigkeitsquelle (102) und einem angeschlossenen Fluidkreislauf (105) zu bewegen.

10. Vorrichtung (101) nach Anspruch 9, wobei die Steuervorrichtung (113) betriebsfähig ist, die Pumpe (119) selektiv ein- und auszuschalten, und die auf dem nichtflüchtigen computerlesbaren Medium gespeicherten Programmanweisungen durch die Steuervorrichtung (113) ausführbar sind, um die Steuervorrichtung (113) zu veranlassen:
die Pumpe (119) während des Nicht-Zuführbetriebsmodus in einem ausgeschalteten Zustand zu halten, und
die Pumpe (119) während einer Dauer des Zuführbetriebsmodus in einem eingeschalteten Zustand zu halten.

11. Vorrichtung (101) nach einem der Ansprüche 4 bis 10, ferner umfassend eine Erfassungsanordnung (116) zum Bereitstellen einer Anzeige bezüglich des Flüssigkeitsstands innerhalb des Gefäßes (108).

12. Vorrichtung (101) nach einem der Ansprüche 4 bis 11, wobei die Steuervorrichtung (113) einen Zeitgeber umfasst.

13. Vorrichtung (101) nach einem der Ansprüche 4 bis 12, ferner umfassend eine Druckerfassungsanordnung (118) zum Bereitstellen einer Anzeige bezüglich des Drucks der Systemflüssigkeit innerhalb eines angeschlossenen Fluidkreislaufs (115).

14. Heiz- oder Kühlsystem (301), umfassend die Vorrichtung (101) nach einem der Ansprüche 4 bis 13.

15. Heiz- oder Kühlsystem (301) nach Anspruch 14, wobei die Flüssigkeitsquelle (102) eine Leitungskaltwasserversorgung ist.

## Revendications

1. Procédé de distribution d'un liquide dans un circuit de fluide (105) d'un système de chauffage ou de refroidissement (301), le procédé comprenant les étapes suivantes :
(a) la réception d'une cuve (108) pourvue d'un orifice d'entrée (109), par lequel un liquide peut entrer dans la cuve (108) dans une direction d'entrée (104), et d'un orifice de sortie (110), par lequel un liquide peut sortir de la cuve (108) dans une direction de sortie (107) ;
(b) la liaison de l'orifice d'entrée (109) de la cuve (108) à une source de liquide (102) par le biais d'une vanne d'entrée (111), la vanne d'entrée (111) étant située en amont de l'orifice d'entrée (109) et pouvant fonctionner pour empêcher un liquide d'entrer dans la cuve (108) par l'intermédiaire de l'orifice d'entrée (109) ou lui permettre, et la liaison de l'orifice de sortie (110) de la cuve (108) au circuit de fluide (105) par le biais d'une vanne de sortie (112), la vanne de sortie (112) étant située en aval de l'orifice de sortie (110) et pouvant fonctionner pour empêcher un liquide de sortir de la cuve (108) par l'intermédiaire de l'orifice de sortie (110) ou lui permettre, un trajet d'écoulement (115) entre la source de liquide (102) et le circuit de fluide (105) s'étendant ainsi à travers la cuve (108) ;
(c) la vanne d'entrée (111) étant ouverte et la vanne de sortie (112) étant fermée, l'autorisation au liquide provenant de la source de liquide (102) de remplir la cuve (108) ;
(d) la vanne d'entrée (111) étant fermée et la vanne de sortie (112) étant ouverte, l'autorisation au liquide à l'intérieur de la cuve (108) de se vider ;
(e) la vanne d'entrée (111) étant fermée et la vanne de sortie (112) étant fermée, le maintien d'une interruption par remplissage d'air, à l'intérieur de la cuve (108), entre la source de liquide (102) et le circuit de fluide (105).

2. Procédé selon la revendication 1, dans lequel à l'étape (c) ou à l'étape (d), une lumière ultraviolette est émise pour venir en incidence sur le liquide s'écoulant le long dudit trajet d'écoulement (115).

3. Procédé selon la revendication 1 ou 2, dans lequel à l'étape (c) ou à l'étape (d), un additif (123) est distribué au liquide s'écoulant le long dudit trajet d'écoulement (115).

4. Procédé selon l'une quelconque des revendications 1 à 3, dans lequel la source de liquide (102) est une alimentation de réseau d'eau froide.

5. Appareil (101) pour distribuer un liquide à un circuit de fluide (105) d'un système de chauffage ou de refroidissement (301), ledit appareil comprenant :
une cuve (108) pourvue d'un orifice d'entrée (109), par lequel un liquide peut entrer dans la cuve (108) dans une direction d'entrée (104), et d'un orifice de sortie (110), par lequel un liquide peut sortir de la cuve (108) dans une direction de sortie (107) ;
une vanne d'entrée (111) située en amont de l'orifice d'entrée (109) et pouvant fonctionner pour empêcher un liquide d'entrer dans la cuve (108) par l'intermédiaire de l'orifice d'entrée (109) ou lui permettre, et
une vanne de sortie (112) située en aval de l'orifice de sortie (110) et pouvant fonctionner pour empêcher un liquide de sortir de la cuve (108) par l'intermédiaire de l'orifice de sortir (110) ou lui permettre,
l'orifice d'entrée (109) pouvant être relié, par le biais de la vanne d'entrée (111), à une source de liquide (102) pour distribuer un liquide dans la cuve (108), et l'orifice de sortie (110) pouvant être relié, par le biais de la vanne de sortie (112), au circuit de fluide (105) pour distribuer un liquide au circuit de fluide (105), un trajet d'écoulement (115) entre une source de liquide (102) reliée et un circuit de fluide (105) relié s'étendant à travers la cuve (108) ;
un contrôleur (113) pouvant fonctionner pour ouvrir et fermer de façon sélective la vanne d'entrée (111) et la vanne de sortie (112),
un support non transitoire lisible par ordinateur, et
des instructions de programme stockées sur le support non transitoire lisible par ordinateur qui peuvent être exécutées par le contrôleur (113) pour amener le contrôleur (113) à :
(a) pendant un mode de fonctionnement de non distribution, maintenir la vanne d'entrée (109) dans un état fermé et maintenir la vanne de sortie (110) dans un état fermé, pour maintenir une interruption par remplissage d'air, à l'intérieur de la cuve (108), entre la source de liquide (102) et le circuit de fluide (105) ; et
(b) pendant un mode de fonctionnement de distribution, successivement :
(i) amener la vanne d'entrée (109) à se déplacer de l'état fermé à un état ouvert,
(ii) maintenir la vanne d'entrée (111) dans l'état ouvert et maintenir la vanne de sortie (1102) dans l'état fermé pendant une première période, pour permettre à la cuve (108) de se remplir de liquide,
(iii) amener la vanne d'entrée (111) à se déplacer de l'état ouvert à l'état fermé,
(iv) amener la vanne de sortie (112) à se déplacer de l'état fermé à un état ouvert,
(v) maintenir la vanne d'entrée (111) dans l'état fermé et maintenir la vanne de sortie (112) dans l'état ouvert pendant une seconde période, pour permettre à la cuve (108) de se vider du liquide,
(vi) amener la vanne de sortie (112) à se déplacer de l'état ouvert à l'état fermé.

6. Appareil (101) selon la revendication 5, comprenant en outre une source de lumière (114) pouvant fonctionner pour émettre une lumière ultraviolette venant en incidence sur un liquide s'écoulant le long dudit trajet d'écoulement (115) entre une source de liquide (102) reliée et un circuit de fluide (105) relié.

7. Appareil (101) selon la revendication 6, dans lequel le contrôleur (113) peut fonctionner pour allumer et éteindre de façon sélective la source de lumière (114), et les instructions de programme stockées sur le support non transitoire lisible par ordinateur peuvent être exécutées par le contrôleur (113) pour amener le contrôleur (113) à :
maintenir la source de lumière (114) dans un état éteint pendant le mode de fonctionnement de non distribution, et
maintenir la source de lumière (114) dans un état allumé pendant le mode de fonctionnement de distribution.

8. Appareil (101) selon l'une quelconque des revendications 4 à 7, comprenant en outre une vanne de dosage (120) destinée à se relier à une sortie (121) d'un réservoir d'additif (122), dans lequel la vanne de dosage (120) peut fonctionner pour distribuer un additif (123) depuis le réservoir d'additif (122) à un liquide s'écoulant le long dudit trajet d'écoulement (115) entre une source de liquide (102) reliée et un circuit de fluide (105) relié.

9. Appareil (101) selon l'une quelconque des revendications 4 à 8, comprenant en outre une pompe (119) pouvant fonctionner pour déplacer le liquide le long dudit trajet d'écoulement (115) entre une source de liquide (102) reliée et un circuit de fluide (105) relié.

10. Appareil (101) selon la revendication 9, dans lequel le contrôleur (113) peut fonctionner pour activer et désactiver de façon sélective la pompe (119), et les instructions de programme stockées sur le support non transitoire lisible par ordinateur peuvent être exécutées par le contrôleur (113) pour amener le contrôleur (113) à :
maintenir la pompe (119) dans un état désactivé pendant le mode de fonctionnement de non distribution, et
maintenir la pompe (119) dans un état activé pendant une période du mode de fonctionnement de distribution.

11. Appareil (101) selon l'une quelconque des revendications 4 à 10, comprenant en outre un agencement de détection (116) destiné à fournir une indication relative au niveau de liquide à l'intérieur de la cuve (108).

12. Appareil (101) selon l'une quelconque des revendications 4 à 11, dans lequel le contrôleur (113) comprend une minuterie.

13. Appareil (101) selon l'une quelconque des revendications 4 à 12, comprenant en outre un agencement de détection de pression (118) destiné à fournir une indication relative à la pression du liquide de système à l'intérieur d'un circuit de fluide (115) relié.

14. Système de chauffage ou de refroidissement (301) comprenant l'appareil (101) selon l'une quelconque des revendications 4 à 13.

15. Système de chauffage ou de refroidissement (301) selon la revendication 14, dans lequel la source de liquide (102) est une alimentation de réseau d'eau froide.
